# EUROPEAN PATENT SPECIFICATION

(11) **EP 1 591 696 B1**
(45) Date of publication and mention of the grant of the patent: **21.01.2009**
(21) Application number: 05103370.2
(22) Date of filing: 26.04.2005
(51) Int. Cl.: F16H 59/02

(54) **Gear shift lever for a vehicle**
Schalthebel für ein Fahrzeug
Levier de changement de vitesses pour une véhicule

(30) Priority: 27.04.2004 IT MI20040821
(43) Date of publication of application: 02.11.2005
(73) Proprietor: IVECO S.p.A., 10156 Torino (IT)
(72) Inventor: Moretti, Carlo, 25122 Brescia (IT)
(74) Representative: Borsano, Corrado

(56) References cited:
- EP-A- 1 111 276
- DE-A- 10 152 860
- US-A- 3 245 504
- US-A- 4 524 635
- US-A- 5 033 324
- "-BOITE DE VITESSES-" REVUE TECHNIQUE DIESEL, ETAI. BOULOGNE-BILLANCOURT, FR, no. 167, 1991, page 49, XP000215828 ISSN: 0037-2579

## Description

### FIELD OF THE INVENTION

This invention relates to a gear shift lever for a vehicle, in particular for a vehicle with "low range" ratios and "high range" ratios - or gears.

### PRIOR ART

In several types of vehicles - for example trucks, off-road vehicles, agricultural tractors - the transmission system is used to select a series of so-called "normal" gears or transmission ratios and a series of so-called "low range" gears or transmission ratios: low range gears are usually selected by engaging a gear or reduction gear train that proportionally reduces all the normal ratios.

Switching from normal ratios to low range ratios is often effected by means of an appropriate hand-operated selector lever, that is used in addition to the traditional gear shift lever in order to select the different normal or low range ratios.

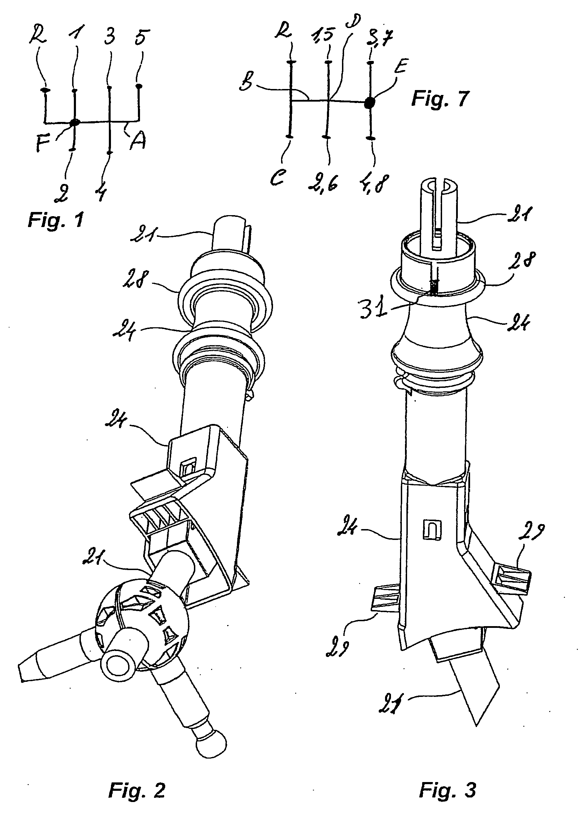

On the other hand, in some types of vehicles - trucks or even automobiles - in some cases - for example when the transmission system also incorporates a synchronizer for the reverse gear, or according to the layout of the branches used to select and engage the various gears - there should ideally be a safety mechanism that prevents the driver from inadvertently engaging the reverse gear, or at least makes such engagement more difficult; in conventional systems this is achieved for example by means of so-called "elastic wall" devices, i.e. spring assemblies that - in the example in Figure 1 - generate increased and/or progressive resistance when the driver shifts the gear lever leftwards along the selection axis A beyond the neutral position F; in Figure 1 the references 1, 2, 3, 4, 5, R are used to indicate respectively and schematically the positions of the first, second, third, fourth, fifth and reverse gears in a conventional transmission system; furthermore, in technical jargon, with reference to Figure 1 the horizontal movements of the gear lever refer to the "selection axis", while the vertical movements refer to the "shifting axis".

Such "elastic walls" make it more difficult to engage the reverse gear.

The publication "BOITE DE VITESSES", REVUE TECHNIQUE DIESEL ET AL., BOULOGNE-BILLANCOURT, FR, n. 167, 1991, page 49 discloses a generic shift lever for a vehicle that can be used to select and shift one of several gear speeds within said transmission system, comprising a first switch that selects a first series of low range gear ratios or a second series of high range gear ratios, and a second switch that enables or disables the shifting by the gear lever of at least one predetermined gear ratio, in which at or close to the free end of the lever there is a part that can be gripped using one hand in order to operate said lever, and the first and second switches are so structured as to be both operated by the driver using the hand that is used to grip the lever.

One purpose of this invention is to provide a transmission system for a vehicle that incorporates a selector that switches from a series of "low range" ratios to a series of "normal" ratios, and a safety mechanism to prevent the inadvertent engagement of predetermined gears - for example but not necessarily the reverse gear - and to overcome the drawbacks of the conventional transmission systems described above, with specific reference to ease of use and ergonomics.

### SUMMARY OF THE INVENTION

According to a first aspect of this invention, such drawbacks are overcome with a gear shift lever for a vehicle that can be used to select and shift one of several gear speeds within said transmission system, as claimed in claim 1.

The advantages of this invention will become apparent to the person skilled in the art from the following detailed description of a preferred but not exclusive embodiment, with reference to the following drawings.

### LIST OF DRAWINGS

Figure 1 illustrates the positions of the various gears in a conventional transmission system;
Figures 2 and 3 are schematic illustrations of a perspective view, respectively from the bottom and from the top, of the body of the lever in an example of an embodiment of a vehicle transmission system according to this invention;
Figures 4 and 5 are schematic illustrations of an exploded perspective view, respectively from the bottom and from the top, of the first and second mobile actuators and some internal transmission devices of the transmission system in Figure 2;
Figure 6 is a photograph with a perspective view of the upper part of the gear lever when assembled as part of the transmission system in Figure 2;
Figure 7 illustrates the positions of the various gears in the transmission system in Figure 2.

### DETAILED DESCRIPTION OF THE INVENTION

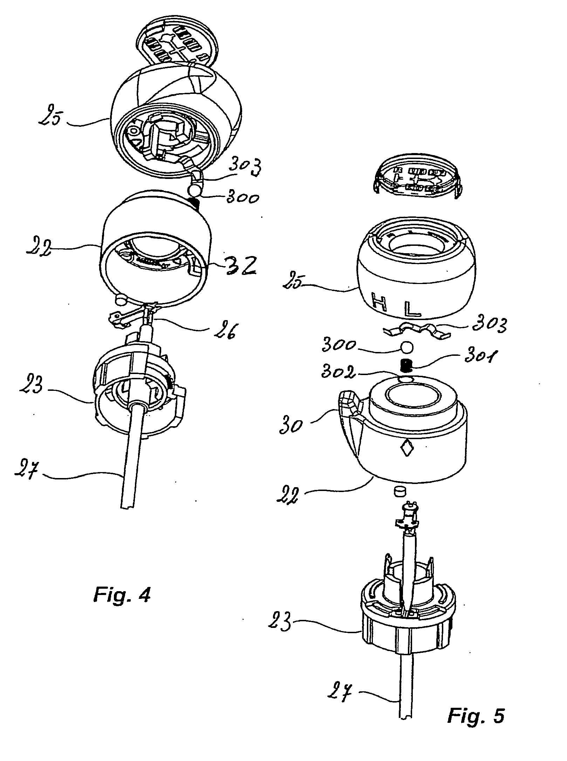

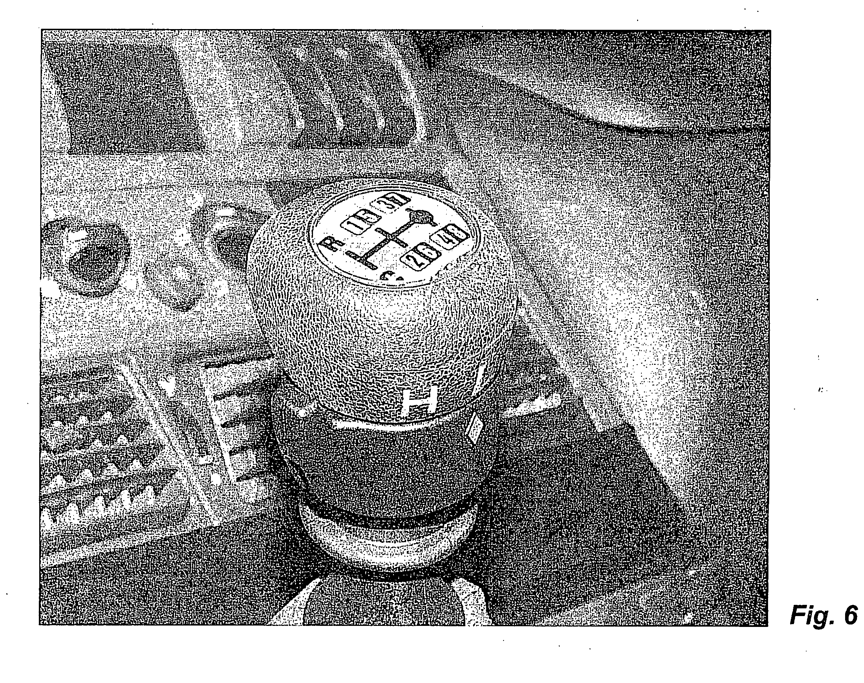

Figures 2-7 relate to a preferred embodiment of a gear shift lever according to this invention. Such lever, shown in the picture of Figure 6, comprises a lever body 21 that is free at the top and fastened at the bottom to a supporting structure (not shown) that is an integral part of the vehicle frame. The knob 25, the first mobile actuator 22, the internal base of the first mobile element 23 (Figures 4, 5), and the second mobile actuator 24 (Figures 2, 3) are assembled on the top end of the lever body 21.

In this example of a preferred embodiment the knob 25 is assembled so that it is an integral part of such lever body 21 and cannot move in relation to such lever body; the internal base of the first mobile element 23 is integral with the upper end of the second mobile actuator 24, which covers much of the lever body 21 like a sleeve and can slide lengthwise up and down in relation to such lever body.

The first mobile actuator 22 is mounted on the upper end of the lever body 21 so that it can rotate in relation to such lever body, moving between two switching positions illustrated in Figure 6 as H ("high") and L ("low"): when the first mobile actuator 22 is turned and brought to the position L, it triggers an appropriate rotating electric switch 26 and the connecting wires 27 (Figure 4) to activate a pneumatic valve (not shown) that engages an additional reduction gear on the output shaft of a first gear ratio so as to produce a further reduction of the various gear speeds that can be selected by moving the fixed knob 25 of the lever, and obtain a series of "low range" gear ratios (references 1, 2, 3, 4 in Figure 7); by turning the first mobile actuator 22 to the switching position H, the additional reduction gear is disengaged in order to obtain the series of "high-range" gear ratios (references 5, 6, 7, 8 in Figure 7).

In this description the set of gears or other elements in a vehicle that produce a plurality of gear ratios between a driving shaft and a driven shaft is referred to as the "main transmission" and a gear, set of gears or other device that can be reversibly connected to the main transmission so as to reduce all the gear ratios in order to obtain, for example in vehicles such as trucks, off-road vehicles or tractors, a series of low range gears, is referred to as the "low range gear device".

In this example of a preferred embodiment the second mobile actuator 24 incorporates a gripping flange 28 (Figures 2, 3) or another ring-type projection, that the driver can easily grip and pull or push using the fingers on the same hand that is used to grip the fixed knob 25 to operate the entire lever, as in the case of a conventional transmission system; the second mobile actuator 24, which slides up and down in relation to the lever body 21 between two switching positions, allows or prevents the driver from selecting or engaging some further gears, in this preferred embodiment the reverse gear R and the slowest low range ratio (the so-called crawler ratio): in particular, in this example of a preferred embodiment of the invention, when the second mobile actuator 24 is in the lowest switching position, the projecting parts 29 engage against appropriate seats (not shown) in the above-mentioned gear supporting structure, making it impossible to push the lever body 21 along the selection axis B beyond the point D in the selection pattern as illustrated in Figure 7 of the transmission system according to this invention; when the second mobile actuator 24 is in the highest switching position, the projecting parts 29 do not engage against the aforesaid seats in the gear support and the lever body 21 can be pushed along the selection axis B beyond the point D in the selection pattern as illustrated in Figure 7, and the reverse gear R and the "crawler" C can be selected.

In this way a so-called "syringe-type" safety mechanism is created to prevent the inappropriate selection of predetermined gears; the advantage of such system is that much less force is required to operate the gear shift lever compared to systems that incorporate the "elastic wall" mechanism described above or other systems that use springs or other elastic elements to make it difficult to engage predetermined gear ratios.

With this system it is also possible to completely eliminate the risk of accidentally engaging one of the predetermined gears - in this example the reverse gear and the first low range gear - and not merely to make such operation more difficult.

Finally, such system also enables much more accurate position referencing compared to the "elastic wall" system: in an elastic wall system if the user inadvertently moves the gear shift lever along a horizontal or vertical selection or engagement axis that is not enabled, the resistance that is felt increases gradually but continuously on a certain section-of the axis, while with a syringe-type safety mechanism the step change in the resistance on the gear shift lever is felt much more distinctly.

In the diagram in Figure 7, the letter E indicates the neutral position of the gear shift lever.

In this preferred embodiment of the invention the reverse gear R and crawler gear C are advantageously placed opposite one another or in any case adjacent, and are accessed via the same section of the gear selection axis.

In addition it is foreseen a further locking/unlocking mechanism apt to avoid that the gear shift lever crosses over the point D (Fig. 7) and enters the branch comprising the reverse gear R and the crawler gear C, if the gear shift is in the "high range" position, and it is therefore apt to avoid insertion of gears R and C if the gear shift is in the "high range" position.

This further locking/unlocking mechanism avoids the upward movement of the second mobile actuator 24 if the first mobile actuator 22 is in the "H" position, and is embodied for example in the following way.

The upper part of the second mobile actuator 24 above the gripping flange 28 can penetrate inside the first mobile actuator 22 in the upward movement.

A first relief 31 projecting externally (in black in fig. 3) is present on the upper part of the second mobile actuator 24, above the gripping flange 28. In the internal part of the first mobile actuator 22 there is a second relief 32 (Fig. 4) projecting internally. If the element 22 is in the "H" position, the two reliefs 31 and 32 are aligned in corresponding positions above each other, so that the relief 32 avoids the upward movement of the relief 31. If instead the element 22 is in the "L" position, the two reliefs 31 and 32 are out of line, without reciprocal interference.

According to this invention, the first switch - that switches between the low range and the high range gears - and the second switch - that enables or disables the engagement of predetermined gears - can both be operated by the driver using the same hand that is used to grip the lever: this means that the two switches, and any other switches that may be installed, can be operated easily and quickly by hand.

In particular, in this example of a preferred embodiment, the first rotating mobile actuator 22 and the second sliding mobile actuator 24 are both accessible and can both be operated by the driver using the same hand that is used to grip the end of the gear shift lever. The combined use of a rotating mobile actuator and a sliding mobile actuator means that the control area is sufficiently compact and limited in size.

In this example of a preferred embodiment the first mobile actuator 22, is placed above the second mobile actuator 24, i.e. closer to the free end of the lever; however, in alternative forms of embodiment - not shown - these positions may be inverted, for example with the first mobile actuator 22 under the second mobile actuator 24.

Furthermore in alternative forms of embodiment, not shown, the second mobile actuator 24 may translate not only along straight trajectories but may also travel along trajectories that follow different curves in space, or may even rotate and translate.

To facilitate the single-handed operation of the various switches, the first rotating mobile actuator 22, has a projecting part or tooth 30, that projects transversely in relation to the actual lever and can easily be pushed or pulled using the fingers of the hand used to grip the knob 25.

The electric switch that is actuated by the first mobile actuator 22 preferably incorporates an appropriate bistable mechanism that only pushes the rotating element 22 to the two extreme switching positions, excluding any other intermediate positions; in this example of a preferred embodiment such bistable mechanism consists of a ball 300 that is held under pressure by a spring 301 that is housed in a seat 302 in the rotating actuator 22; the ball 300 engages against an appropriately-shaped sheet metal profile 303 that incorporates two concave seats - in correspondence with the two stable equilibrium positions of the rotating element 22 - separated by a sharp edge that prevents the ball 300 from stopping in the intermediate positions during the rotation of the element 22.

Many other alternative and equivalent embodiments of the invention can be conceived and reduced to practice without departing from the invention as defined in the claims; in particular for example the projecting parts 29 and the seats on the supporting structure against which they engage to prevent or allow the engagement of specific gears may be replaced with other different and appropriate locking/unlocking mechanisms.

It is intended that the appended claims cover all modifications and variations as fall within the scope of the present invention.

## Claims

1. A gear shift lever for a vehicle that can be used to select and shift one of several gear speeds within a transmission system,
- comprising a first switch (22) that selects a first series of low range gear ratios or a second series of high range gear ratios, and a second switch (24) that enables or disables the shifting by the gear lever (21) of at least one predetermined gear ratio, in which at or close to the free end of the lever (21) there is a part (25) that can be gripped using one hand in order to operate said lever, and the first (22) and second (24) switches are so structured as to be both operated by the driver using the hand that is used to grip the lever,
- one of said first and second switches comprising a first mobile actuator (22) that is operated by the driver, in which the driver uses one hand to turn said first mobile actuator (22) in relation to the rest of the lever in order to move it to at least two switching positions, and the other one of said first and second switches comprises a second mobile actuator (24) that is operated by the driver and translates along the control lever to at least two switching positions, where the first and second mobile actuators can both be accessed and operated by the driver using the same hand that is used to grip the lever,
**characterized in that** a further locking/unlocking mechanism (31,32) is comprised between said first and second switch to avoid that the gear shift lever enters a branch comprising a reverse gear (R) and a crawler gear (C) if said first switch selects said high range (H).

2. Lever according to claim 1, **characterized in that** said further locking/unlocking mechanism avoids an upward movement of said second mobile actuator (24) if said first mobile actuator (22) is in the high range (H) position.

3. Lever according to claim 2, **characterized in that** said further locking/unlocking mechanism comprises:
- a first relief (31) projecting externally on the upper part of the second mobile actuator (24), above a gripping flange (28),
- a second relief (32) projecting internally in the internal part of the first mobile actuator (22),
such that if the first mobile actuator (22) is in the "high range" position (H), the second relief (32) avoids the upward movement of the first relief (31)

4. Lever according to claim 3, **characterized in that** the first mobile actuator (22) is placed closer to the free end of the lever than the second mobile actuator (24).

5. Lever according to any of the claims from 1 to 4, **characterized in that** at least one of the first and second switches comprises an electric switch.

6. Lever according to any of the claims from 1 to 5, **characterized in that** the second switch (24) comprises at least a first locking/unlocking mechanism (29) that reversibly engages against a second locking/unlocking mechanism, in which the first and second locking/unlocking mechanisms are mobile in relation to one another and engage against one another or otherwise according to the position of the second mobile actuator, respectively to disable or enable the engagement of at least one predetermined gear ratio.

7. Lever according to claim 6, **characterized in that** the first locking/unlocking mechanism (29) is fitted to the lever, while the second locking/unlocking mechanism is outside the lever and fastened to the supporting structure that secures the control lever to the rest of the vehicle.

8. Lever according to claim 7, **characterized in that** the second switch (24) comprises a sleeve that slides along the rest of the lever, and the first locking/unlocking mechanism is incorporated in the sliding sleeve.

9. Lever according to any of the preceding claims , **characterized in that** the first mobile actuator (22) comprises a tooth (30) or other projecting part that is operated by using one or more fingers of the hand that is used to grip the end (25) of the lever, in which the tooth or other projecting part extends at least transversely in relation to the actual lever.

10. Device for the transmission system of a vehicle, comprising a gear shift lever according to any of the preceding claims.

## Patentansprüche

1. Gangwahlhebel für ein Fahrzeug, der verwendet werden kann, um einen von mehreren Übersetzungsgeschwindigkeiten innerhalb eines Getriebesystems zu wählen und zu schalten,
umfassend einen ersten Schalter (22), der eine erste Reihe von niedrigen Übersetzungsstufen oder eine zweite Reihe von hohen Übersetzungsstufen wählt, und einen zweiten Schalter (24), der das Wechseln durch den Gangwahlhebel (21) zumindest einer vorbestimmten Übersetzungsstufe ermöglicht oder verhindert, wobei sich an oder nah an dem freien Ende des Hebels (21) ein Teil (25) befindet, der mit einer Hand ergriffen werden kann, um den Hebel zu bedienen, und der erste (22) und zweite (24) Schalter so strukturiert sind, um beide durch den Fahrer mit der Hand, die zum Ergreifen des Hebels verwendet wird, bedient zu werden,
wobei der erste oder der zweite Schalter einen ersten mobilen Aktor (22) umfasst, der durch den Fahrer bedient wird, indem der Fahrer eine Hand verwendet, um den ersten mobilen Aktor (22) in Bezug auf den Rest des Hebels zu drehen, um ihn zu zumindest zwei Schaltpositionen zu bewegen, und der andere des ersten und zweiten Schalters einen zweiten mobilen Aktor (24) umfasst, der durch den Fahrer bedient wird, und entlang des Steuerungshebels an zumindest zwei Schaltpositionen verfährt, wobei sowohl der erste als auch der zweite mobile Aktor durch den Fahrer mit derselben Hand, die zum Ergreifen des Hebels verwendet wird, zugänglich sind und betrieben werden können,
**dadurch gekennzeichnet, dass** ein weiterer Feststell-/Freigabemechanismus (31, 32) zwischen dem ersten und zweiten Schalter umfasst ist, um zu vermeiden, dass der Gangwahlhebel in einen Ast gelangt, der einen Rückwärtsgang (R) und einen Kriechgang (C) umfasst, wenn der erste Schalter in der hohen Übersetzungsstufe (H) ist.

2. Hebel nach Anspruch 1, **dadurch gekennzeichnet, dass** der weitere Feststell-/Freigabemechanismus eine Aufwärtsbewegung des zweiten mobilen Aktors (24) vermeidet, wenn der erste mobile Aktor (22) in der hohen Übersetzungsstufe (H) ist.

3. Hebel nach Anspruch 2, **dadurch gekennzeichnet, dass** der weitere Feststell-/Freigabemechanismus
ein erstes Relief (31), das außerhalb an dem oberen Teil des zweiten mobilen Aktors (24) oberhalb eines Greifkragens (28) vorsteht, und
ein zweites Relief (32), das innerhalb in dem inneren Teil des ersten mobilen Aktors (22) vorsteht, derart umfasst, dass wenn der erste mobile Aktor (22) in der "hohen" Übersetzungsstufe (H) ist, das zweite Relief (32) die Aufwärtsbewegung des ersten Reliefs (31) vermeidet.

4. Hebel nach Anspruch 3, **dadurch gekennzeichnet, dass** der erste mobile Aktor (22) näher an dem freien Ende des Hebels angeordnet ist als der zweite mobile Aktor (24).

5. Hebel nach einem der Ansprüche 1 bis 4, **dadurch gekennzeichnet, dass** zumindest einer der ersten und zweiten Schalter einen elektrischen Schalter umfasst.

6. Hebel nach einem der Ansprüche 1 bis 5, **dadurch gekennzeichnet, dass** der zweite Schalter (24) zumindest einen ersten Feststell-/Freigabemechanismus (29) umfasst, der reversibel gegen einen zweiten Feststell-/Freigabemechanismus eingreift, wobei der erste und zweite Feststell-/Freigabemechanismus jeweils in Bezug auf einander mobil sind und gegen einander oder ansonsten entsprechend der Position des zweiten mobilen Aktors eingreifen, um das Eingreifen von zumindest einem vorbestimmten Übersetzungsverhältnis zu verhindern bzw. zu ermöglichen.

7. Hebel nach Anspruch 6, **dadurch gekennzeichnet, dass** der erste Feststell-/Freigabemechanismus (29) an den Hebel gefügt ist, während der zweite Feststell-/Freigabemechanismus außerhalb des Hebels und an der Haltestruktur befestigt ist, die den Steuerhebel an dem Rest des Fahrzeugs befestigt.

8. Hebel nach Anspruch 7, **dadurch gekennzeichnet, dass** der zweite Schalter (24) eine Hülse umfasst, die entlang des Rests des Hebels gleitet, und der erste Feststell-/Freigabemechanismus in der gleitenden Hülse aufgenommen ist.

9. Hebel nach einem der vorstehenden Ansprüche, **dadurch gekennzeichnet, dass** der erste mobile Aktor (22) einen Zahn (30) oder einen anderen vorstehenden Teil umfasst, der durch einen oder mehrere Finger der Hand, die zum Greifen des Endes (25) des Hebels verwendet wird, bedient wird, wobei sich der Zahn oder der andere vorstehende Teil zumindest quer in Bezug auf den eigentlichen Hebel erstreckt.

10. Vorrichtung für das Übersetzungssystem eines Fahrzeugs, umfassend einen Gangwahlhebel nach einem der vorstehenden Ansprüche.

## Revendications

1. Levier de changement de vitesse d'un véhicule pouvant être utilisé pour sélectionner et changer l'une des vitesses d'une boîte de vitesse dans un système de transmission,
- comportant un premier commutateur (22) qui sélectionne une première série de rapports de vitesse de gamme basse ou une seconde série de rapports de vitesse de gamme haute, et un second commutateur (28) permettant ou empêchant le changement de vitesse par l'intermédiaire du levier de vitesse (21) d'au moins un rapport de vitesse prédéterminé, dans lequel à l'extrémité libre du levier (21), ou à proximité de celle-ci, se trouve une partie (25) pouvant être saisie par une main afin d'actionner ledit levier, et les premier (22) et second (24) commutateurs sont structurés de telle manière qu'ils peuvent être actionnés tous les deux par le conducteur se servant de la main utilisée pour saisir le levier,
- un desdits premier et second commutateurs comprenant un premier actionneur mobile (22) qui est actionné par le conducteur, le conducteur utilisant une main pour tourner ledit premier actionneur mobile (22) par rapport au reste du levier afin de le déplacer vers au moins deux positions de commutation, et l'autre desdits premier et second commutateurs comprenant un second actionneur mobile (24) qui est actionné par le conducteur, et qui se déplace en translation en même temps que le levier de commande vers au moins deux positions de commutation, dans lequel les premier et second actionneurs mobiles sont tous deux accessibles et peuvent être actionnés par le conducteur à l'aide de la main qui est utilisée pour saisir le levier,
**caractérisé en ce qu'**un mécanisme de verrouillage/déverrouillage supplémentaire (31, 32) est inclus entre lesdits premier et second commutateurs pour éviter que le levier de changement de vitesse ne pénètre dans une branche comportant une vitesse de marche arrière (R) et une vitesse tout terrain (C) si ledit premier commutateur sélectionne ladite gamme haute (H).

2. Levier selon la revendication 1, **caractérisé en ce que** ledit mécanisme de verrouillage/déverrouillage supplémentaire évite un déplacement vers le haut dudit second actionneur mobile (24) si ledit premier actionneur mobile (22) est dans la position de gamme haute (H).

3. Levier selon la revendication 2, **caractérisé en ce que** ledit mécanisme de verrouillage/déverrouillage supplémentaire comporte :
- un premier relief (31) faisant saillie vers l'extérieur sur la partie supérieure du second actionneur mobile (24), au-dessus d'un rebord de préhension (28),
- un second relief (32) faisant saillie vers l'intérieur dans la partie intérieure du premier actionneur mobile (22),
de telle sorte que si le premier actionneur mobile (22) est en position "de gamme haute" (H), le second relief (32) évite le déplacement vers le haut du premier relief (31).

4. Levier selon la revendication 3, **caractérisé en ce que** le premier actionneur mobile (22) est placé plus près de l'extrémité libre du levier que le second actionneur mobile (24).

5. Levier selon l'une quelconque des revendications 1 à 4, **caractérisé en ce qu'**au moins un des premier et second commutateurs est constitué d'un commutateur électrique.

6. Levier selon l'une quelconque des revendications 1 à 5, **caractérisé en ce que** le second commutateur (24) comprend au moins un premier mécanisme de verrouillage/déverrouillage (29) venant en prise de manière réversible contre un second mécanisme de verrouillage/déverrouillage, dans lequel les premier et second mécanismes de verrouillage/déverrouillage sont mobiles l'un par rapport à l'autre et viennent en prise l'un contre l'autre ou autrement en fonction de la position du second actionneur mobile, respectivement, pour empêcher ou pour permettre la mise en prise d'au moins un rapport de vitesse prédéterminé.

7. Levier selon la revendication 6, **caractérisé en ce que** le premier mécanisme de verrouillage/déverrouillage (29) est fixé sur le levier, tandis que le second mécanisme de verrouillage/déverrouillage est à l'extérieur du levier, et fixé sur la structure de support qui maintient le levier de commande sur le reste du véhicule.

8. Levier selon la revendication 7, **caractérisé en ce que** le second commutateur (24) comporte un manchon qui coulisse le long du reste du levier, et le premier mécanisme de verrouillage/déverrouillage est incorporé dans le manchon coulissant.

9. Levier selon l'une quelconque des revendications précédentes, **caractérisé en ce que** le premier actionneur mobile (22) comporte une dent (30) ou une autre partie faisant saillie qui est actionnée en utilisant un ou plusieurs doigts de la main qui est utilisée pour saisir l'extrémité (25) du levier, la dent ou une autre partie faisant saillie s'étendant au moins de manière transversale par rapport au levier effectif.

10. Dispositif pour le système de transmission d'un véhicule comportant un levier de changement de vitesse selon l'une quelconque des revendications précédentes.
